# EUROPÄISCHE PATENTSCHRIFT

(11) **EP 2 293 998 B1**
(45) Veröffentlichungstag und Bekanntmachung des Hinweises auf die Patenterteilung: **24.10.2012**
(21) Anmeldenummer: 09776659.6
(22) Anmeldetag: 28.05.2009
(51) Int. Cl.: B65G 47/86

(54) **KLAMMERGREIFER**
CLAMP GRIPPER
PINCE DE PRÉHENSION

(30) Priorität: 10.07.2008 DE 102008032645
(43) Veröffentlichungstag der Anmeldung: 16.03.2011
(73) Patentinhaber: Krones AG, 93073 Neutraubling (DE)
(72) Erfinder: HAUSLADEN, Wolfgang, 93099 Mötzing (DE); LANDLER, Bruno, 93073 Neutraubling (DE)
(74) Vertreter: Grünecker, Kinkeldey, Stockmair & Schwanhäusser
(86) Internationale Anmeldenummer: PCT/EP2009/003828
(87) Internationale Veröffentlichungsnummer: WO 2010/003482

(56) Entgegenhaltungen:
- DE-A1- 2 820 315
- DE-A1- 19 536 692
- DE-A1-102005 014 838
- DE-A1-102006 012 020
- DE-U1-202005 002 924
- JP-A- 2 190 229
- US-B1- 6 626 476

## Beschreibung

Die Erfindung bezieht sich auf einen Klammergreifer der im Oberbegriff von Anspruch 1 erläuterten Art.

Ein derartiger Klammergreifer ist aus der WO 2006/089610 bekannt. Der bekannte Klammergreifer ist Teil eines Gefäß-Transportsystems, insbesondere eines Flaschen-Transportsystems, und dient zum Halten der Flaschen oder Gefäße während des Transports durch verschiedene Behandlungsstationen oder dergleichen. Derartige Klammergreifer enthalten zwei Greifarme, die um eine oder zwei Achsen zwischen einer Greifstellung und einer Freigabestellung gegeneinander verschwenkbar sind, um die Gefäße im oberen oder Halsbereich beidseitig zu umschließen und festzuhalten. Um insbesondere den öffnungsvorgang des Klammergreifers zu beschleunigen, damit dieser das Gefäß oder die Flasche schnell freigibt und sofort zur Aufnahme eines neuen Gefäßes bereit ist und/oder zur Beschleunigung bzw. Festigkeitserhöhung des Greifzustandes, ist es gängiger Stand der Technik, Kraftspeicher in Form von Permanentmagneten zu verwenden. Ein Problem dabei ist die Befestigung der Permanentmagnete am Greifer. Beim bekannten Klammergreifer wird der Permanentmagnet über eine Aufnahme mit dem Greiferarm verbunden, die eine Edelstahlkapsel enthält. Die Edelstahlkapsel enthält eine Art Topf mit einem dünnwandigen Topfboden und einer offenen Oberseite. Der Permanentmagnet und ggf. eine Füllscheibe wird in die Kapsel eingesetzt, worauf die Kapsel mit einem Edelstahldeckel verschlossen wird. Das Verschließen erfolgt durch Verschweißen des Deckels mit dem Topf. Trotz Füllscheibe muss jedoch sehr sorgfältig geschweißt werden, damit sich der Permanentmagnet durch die Schweißwärme nicht erwärmt und seine magnetischen Eigenschaften zum Teil oder gänzlich verliert. Diese Verschweißung ist aufwändig.

Aus der DE-A-10 2005 014 838 ist ein gattungsgemäβer klammergreifer für ein Gefäß-Transportsystem ersichtlich, bei dem die Klammerarme komplett aus einem Kunststoff gefertigt sind. Die Bewegung der Klammerarme wird durch Permanentmagnete definiert, die in eine Ausnehmung direkt im Körper der Klammerarme eingebettet sind. Die Permanentmagnete sind nicht gekapselt, d.h. nicht mit einem Deckel versehen und abgeschottet.

Der Erfindung liegt somit die Aufgabe zugrunde, einen Klammergreifer mit einer verbesserten Befestigung des Permanentmagneten zu versehen.

Die Aufgabe wird durch die in Anspruch 1 angegebenen Merkmale gelöst.

Durch die zumindest teilweise Ausbildung der Aufnahme aus Kunststoffmaterial kann die Befestigung ohne Verschweißung mit höherem thermischen Einsatz geschehen.

Dadurch wird die Gefahr ausgeschaltet, dass sich der Permanentmagnet unbeabsichtigt erwärmt und anschließend seine Funktion nicht mehr erfüllen kann.

Die Ahfnahme bestheht aus einem ultraschallverschweißbaren Material, da Ultraschall bei Kunststoff für die unterschiedlichsten Umformvorgänge eingesetzt werden kann und beim Ultraschallverschweißen nur geringe Wärme entsteht, die den Permanentmagneten schädigen könnte, und ist als Kapsel mit einem durch Ultraschall aufschweißbaren Deckel ausgebildet.

Der Greiferarm ist zweigeteilt und enthält einerseits einen Klammergrundkörper, der die Greiffunktion erfüllt, sowie die Aufnahme für den Permanentmagneten, die auf die unterschiedlichsten Arten mit dem Klammergrundkörper verbunden werden kann.

Vorteilhafte Weiterbildungen der Erfindung sind den Unteransprüchen zu entnehmen.

Die Aufnahme kann beispielsweise auf den Klammergrundkörper einfach aufgesteckt werden, wobei man sich bevorzugt auch der elastischen Eigenschaften von Kunststoff bedient.

Wenn der Greiferarm eine aus Kunststoff bestehende Lagerbuchse für seine Achse aufweist, so ist es besonders bevorzugt, die Aufnahme und die Lagerbuchse einstückig auszubilden und die Aufnahme über die Lagerbuchse am Klammergrundkörper durch Aufstecken zu befestigen.

Die Aufnahme kann jedoch auch durch einen Befestigungsniet, der bevorzugt ebenfalls aus Kunststoff besteht, mit dem Klammergrundkörper verbunden werden, wobei der Befestigungsniet bevorzugt durch Ultraschall verformt wird.

Eine weitere, konstruktiv einfache Lösung besteht darin, den Klammergrundkörper mit einem Verankerungsteil in der Aufnahme zu verankern.

Das Verankerungsteil kann beispielsweise dazu dienen, die Aufnahme am Klammergrundkörper anzuspritzen.

Eine weitere Möglichkeit, mit Hilfe eines Verankerungsteils die Aufnahme und den Klammergrundkörper zu verbunden, besiehi darin, das Verankerungsteil durch Befestigen des Deckels an einer als Kapsel ausgebildeten Aufnahme in die Aufnahme einzuschließen.

Durch die erfindungsgemäße Ausgestaltung ist es möglich, den Klammergrundkörper als einfaches Blechbiegeteil auszubilden, so dass der Klammergrundkörper einfach und kostengünstig herstellbar ist.

Ausführungsbeispiele der Erfindung werden nachfolgend anhand der Zeichnungen näher erläutert. Es zeigen:
- Fig. 1: eine Draufsicht auf einen erfindungsgemäßen Klammergreifer in schematisierter Darstellung,
- Fig. 2: eine bevorzugte Befestigungsmöglichkeit eines Permanentmagneten an einem Greiferarm,
- Fig. 3: eine weitere Befestigungsmöglichkeit eines Permanentmagneten am Greiferarm,
- Fig. 4: eine weitere Möglichkeit einer Befestigung eines Permanentmagneten an einem Greiferarm, und
- Fig. 5: eine weitere Möglichkeit einer Befestigung eines Permanentmagneten an einem Greiferarm.

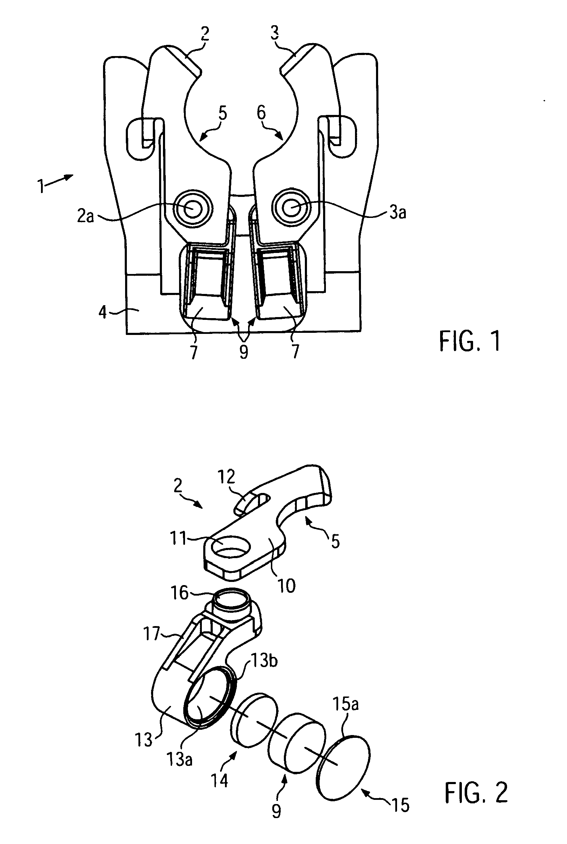

Fig. 1 zeigt in Draufsicht und schematischer Darstellung einen Klammergreifer 1, der zum Handhaben und Transportieren von Gefäßen, wie z. B. Flaschen, ausgebildet ist, und die Gefäße im oberen bzw. Halsbereich erfassen und festhalten kann (sog. Neckhandling). Der Klammergreifer 1 kann bei den unterschiedlichen Maschinen zum Einsatz kommen, z.B. bei Inspektionsmaschinen, Blasmaschinen, Befüllmaschinen, Wasch-, Spül- oder Desinfektionsmaschinen, Etikettiermaschinen, und den unterschiedlichen Transporteinrichtungen, wie Transportsternen oder Transportriemen.

Der Klammergreifer 1 weist einen ersten Greiferarm 2 und einen zweiten Greiferarm 3 auf, die über jeweils eine Achse 2a, 3a schwenkbar an einem Träger 4 geiageri sind. Beide Greiferarme 2, 3 sind an einer Seite ihrer jeweiligen Achse 2a, 3a mit einem Greifbereich 5 bzw. 6 versehen, der an die unterschiedlichsten Gefäßarten und/oder Größen angepasst ist.

An der dem jeweiligen Greifbereich 5, 6 gegenüberliegenden Seite der jeweiligen Achse 2a, 3a ist jeweils wenigstens ein Kraftspeicher 7 bzw. 8 vorgesehen, der jeweils einen Permanentmagneten 9 enthält. Die beiden Permanentmagnete 9 sind in der gewünschten Ausrichtung hinsichtlich ihrer Pole an ihrem jeweiligen Greiferarm 2, 3 derart befestigt, dass eine gewünschte Abstoß- oder Anziehwirkung erreicht wird.

Ein bevorzugtes Ausführungsbeispiel, den Permanentmagneten 9 mit dem jeweils zugeordneten Greiferarm 2, 3 zu verbinden, zeigt Fig. 2. Nachfolgend wird jeweils nur ein Greiferarm dargestellt, da der andere Greiferarm identisch, jedoch spiegelbildlich ausgebildet ist. Jeder Greiferarm 2, 3 enthält einen Klammergrundkörper 10, der mit dem Greifbereich 5 versehen ist und ein Auge 11 zur Aufnahme der zugeordneten Achse 2a aufweist. Der Klammergrundkörper 10 mit dem Greiferbereich 5, dem Auge 11 und ggf. weiteren Merkmalen, beispielsweise einem Anschlag 12, ist einstückig aus Metall gefertigt, das den erforderlichen Verschleißwiderstand und die erforderliche Festigkeit aufweist. Ein bevorzugtes Material ist z. B. ein nichtrostender Stahl. Der Klammergrundkörper 10 besteht bevorzugt aus einem Blechbiegeteil, d.h. er ist aus Blech gelasert oder gestanzt und entsprechend gebogen, beispielsweise indem der Anschlag 12 aus der Ebene des Bleches herausgebogen wurde.

Der Permanentmagnet 9 sitzt in einer Aufnahme 13. Die Aufnahme 13 ist als Kapsel ausgebildet und enthält einen Innenraum 13a, der hinsichtlich seiner Abmessungen und hinsichtlich seiner Form an den Permanentmagneten 9 derart angepasst ist, dass der Permanentmagnet 9 ohne wesentliches Spiel darin aufgenommen werden kann. Im Innenraum 13a findet weiterhin eine der üblichen Füllscheiben 14 Platz. Der Innenraum 13a wird nach dem Einsetzen des Permanentmagneten 9 und der Füllscheibe 14 mit einem Deckel 15 verschlossen, so dass der Permanentmagnet 9 rundum hygienisch einwandfrei eingekapselt ist.

Zumindest die zu verschweißenden Randbereiche 13b bzw. 15a von Aufnahme 13 und Deckel 15, bevorzugt jedoch die gesamte Aufnahme 13 und der gesamte Deckel 15 bestehen jeweils aus einem Kunststoff, der ohne Wärmeanwendung miteinander verbindbar ist, z.B. durch Ultraschallschweißen, Kleben od. dgl.. Die Aufnahme 13 und der Deckel 15 bestehen bevorzugt aus einem ultraschallverschweißbaren Material.

Um die Aufnahme 13 mit dem Klammergrundkörper 10 zu verbinden, ist eine Lagerbuchse 16 für die jeweilige Achse 2a, 3a einstückig mit der Aufnahme 13, beispielsweise über einen Steg 17 verbunden. Die Lagerbuchse 16 wird in das Auge 11 eingesteckt, bevorzugt unter Ausnutzung der elastischen Eigenschaften eingepresst, und hält somit die Aufnahme 13 formschlüssig und/oder kraftschlüssig am Klammergrundkörper 10 fest. Die als Bundbuchse ausgebildete Lagerbuchse 16 kann ggf., bevorzugt ebenfalls durch Ultraschall, an ihrem freien Rand nach außen über den Klammergrundkörper 10 umgebördelt werden.

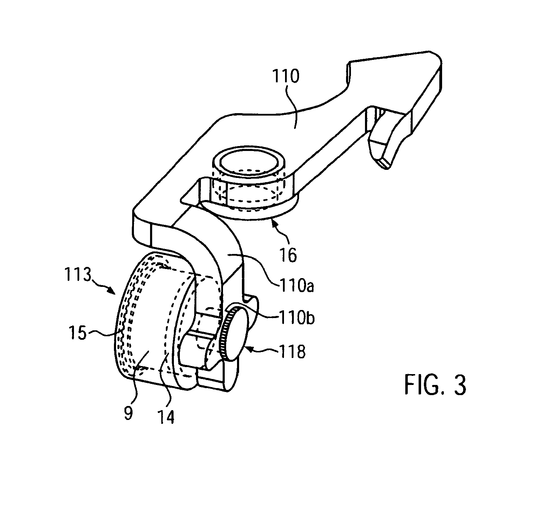

Fig. 3 zeigt ein weiteres Ausführungsbeispiel für die Befestigung einer Aufnahme 113 an einem Klammergrundkörper 110. In diesem Ausführungsbeispiel ist die Aufnahme 113 getrennt von der Lagerbuchse 16 ausgebildet und enthält eine Art topfförmiges Gehäuse, in dem der zylindrische Permanentmagnet 9 und die Füllscheibe 14 untergebracht ist und die durch den beschriebenen Deckel 15 verschlossen wird. Der Deckel 15 und die Aufnahme 113 bestehen zumindest in den Befestigungsbereichen 13b und 15a aus Kunststoff und werden durch Ultraschall miteinander zu einer hygienisch dichten Kapsel für den Permanentmagneten 9 verbunden.

Zur Befestigung der Aufnahme 113 am Klammergrundkörper 110 enthält der Klammergrundkörper 110 eine angeformte, bevorzugt durch Biegen, Lasche 110a mit einer Öse 110b, durch die sich ein Befestigungselement 118, bevorzugt ein Befestigungsniet, erstreckt. Das Befestigungselement 118 besteht bevorzugt ebenfalls aus ultraschallverschweißbarem Kunststoff und ist bevorzugt einstückig mit der Aufnahme 113 ausgebildet. Das Befestigungselement 118 wird durch die Öffnung 110b der Lasche 110a gesteckt und an der der Aufnahme 113 gegenüberliegenden Seite umgebördelt.

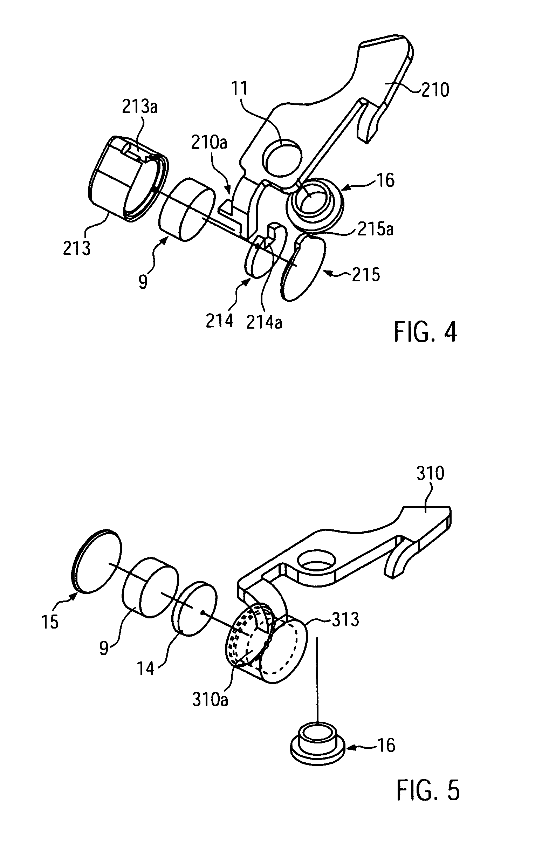

Fig. 4 zeigt eine weitere Möglichkeit, eine Aufnahme 213 an einem Klammergrundkörper 210 zu befestigen. Der Klammergrundkörper 210 enthält in diesem Ausführungsbeispiel ein Verankerungsteil 210a in Form einer Stützlasche, die in eine entsprechende Ausformung 213a der Aufnahme 213 vor dem Aufschweißen des Deckels 215 eingesetzt wird und durch das Aufschweißen des Deckels 215 im Befestigungsbereich auf die Aufnahme 213 in dieser eingeschlossen wird. Um Platz für die Stützlasche zu schaffen, enthält das Plättchen bzw. die Füllscheibe 214 eine Aussparung 214a zur Aufnahme der Stützlasche 210a. Außerdem enthält der Deckel 215 eine Decklasche 215a zum Verschluss der Ausformung 213a. Auch bei diesem Ausführungsbeispiel ist die Lagerbuchse 16 als gesondertes Element ausgebildet und wird in bereits beschriebener Weise in das Auge 11 des Klammergrundkörpers 210 eingesetzt.

Fig. 5 zeigt ein weiteres Ausführungsbeispiel mit einem Klammergrundkörper 310, der über ein Verankerungsteil 310a mit der Aufnahme 313 für den Permanentmagneten 9 verbunden ist. Das Verankerungsteil 310a besteht in diesem Ausführungsbeispiel aus einem Auge oder einem anderen Fortsatz oder dergleichen, der mit der Aufnahme 313 durch Anspritzen verbunden werden kann. Auch hier ist die Aufnahme 313 topfförmig ausgebildet und nimmt in ihrem Inneren die Füllscheibe 14 und den Permanentmagneten 9 auf. Die Aufnahme 313 wird anschließend durch einen Deckel 15 verschlossen, der mit der Aufnahme 313 im Befestigungsbereich ultraschallverschweißt wird. Die Lagerbuchse 16 ist auch in diesem Ausführungsbeispiel als gesondertes Element ausgebildet.

In Abwandlung der beschriebenen und gezeichneten Ausführungsbeispiele können die in den Figuren dargestellten Einzelheiten untereinander ausgetauscht werden. Auch kann das Verankerungsteil beispielsweise L-förmig oder pfeilförmig oder dergleichen ausgebildet sein. In der Variante gemäß Fig. 2 kann neben oder anstelle der Lagerbuchse ein anderes für die Funktion des Klammergreifers notwendiges Bauteil, beispielsweise ein Anschlag, oder ein Widerlager für Federn oder dergleichen, einstückig mit der Aufnahme verbunden werden.

## Patentansprüche

1. Klammergreifer (1) für ein Gefäß-Transportsystem, insbesondere für ein Flaschentransportsystem, mit zwei Greiferarmen (2, 3), die um eine oder um zwei Achsen (2a, 3a) zwischen einer Greifstellung und einer Freigabestellung schwenkbar und in Richtung zur Greifstellung oder zur Freigabestellung durch einen Kraftspeicher (7, 8) beaufschlagt sind, der wenigstens einen in einer Aufnahme (13, 113, 213, 313) befestigten Permanentmagneten (9) enthält, wobei die Aufnahme (13, 113, 213, 313) als Kapsel ausgebildet und mit einem Deckel (15, 215) verschlossen ist, **dadurch gekennzeichnet, dass** der Greiferarm (2, 3) einen mit einem Greifbereich (5, 6) versehenen Klammergrundkörper (10, 110, 210, 310) aus Metall enthält und die Aufnahme (13, 113, 213, 313) mit dem Klammergrundkörper verbunden ist, sowie mit einem mittels Ultraschall aufschweißbarem Deckel (15, 215) versehen ist, wobei die Aufnahme (13, 113, 213, 313) zumindest in einem Befestigungsbereich (13b, 15a) zum Deckel aus ultraschallverschweißbarem Kunststoff besteht.

2. Klammergreifer nach Anspruch 1, **dadurch gekennzeichnet, dass** die Aufnahme (13, 113, 213) auf den Klammergrundkörper (10, 110, 210) aufgesteckt ist.

3. Klammergreifer nach Anspruch 1 oder 2, **dadurch gekennzeichnet, dass** die Aufnahme (13) einstückig mit einer Lagerbuchse (16) für die Achse (2a, 3a) ausgebildet ist, und die Lagerbuchse auf den Klammergrundkörper (10) aufgesteckt ist.

4. Klammergreifer nach Anspruch 1 oder 2, **dadurch gekennzeichnet, dass** die Aufnahme (113) mit einem Befestigungselement (118) im Klammergrundkörper (110) befestigt ist.

5. Klammergreifer nach Anspruch 1 oder 2, **dadurch gekennzeichnet, dass** der Klammergrundkörper (210) mit einem Verankerungsteil (210a) in die Aufnahme (213) eingreift.

6. Klammergreifer nach Anspruch 1, **dadurch gekennzeichnet, dass** die Aufnahme (313) am Klammergrundkörper (310) angespritzt ist.

7. Klammergreifer nach einem der Ansprüche 1 bis 6, **dadurch gekennzeichnet, dass** der Klammergrundkörper (10, 110, 210, 310) als Blechblegeteil ausgebildet ist.

## Claims

1. Claw gripper (1) for a vessel conveying system, in particular for a bottle conveying system, having two gripper arms (2, 3) which can be swivelled about one or two shaft(s) (2a, 3a) between a gripping position and a release position and are loaded in the direction of the gripping position or the release position by an energy store (7, 8) which contains at least one permanent magnet (9) secured in a receiver (13, 113, 213, 313), wherein the receiver (13, 113, 213, 313) is designed as a capsule and is closed by a cover (15, 215), **characterised in that** the gripper arm (2, 3) contains a claw base plate (10, 110, 210, 310) made of metal and provided with a gripping region (5, 6), and the receiver (13, 113, 213, 313) is connected to the claw base plate and is provided with a cover (15, 215) which can be welded on by means of ultrasound, wherein the receiver (13, 113, 213, 313) is made, at least in a securing region (13b, 15a) facing the cover, from ultrasonically weldable plastic material.

2. Claw gripper according to claim 1, **characterised in that** the receiver (13, 113, 213) is placed onto the claw base plate (10, 110, 210).

3. Claw gripper according to claim 1 or 2, **characterised in that** the receiver (13) is designed in one piece with a bearing bush (16) for the shaft (2a, 3a) and the bearing bush is placed onto the claw base plate (10).

4. Claw gripper according to claim 1 or 2, **characterised in that** the receiver (113) is secured in the claw base plate (110) by a securing element (118).

5. Claw gripper according to claim 1 or 2, **characterised in that** the claw base plate (210) engages in the receiver (213) with an anchoring part (210a).

6. Claw gripper according to claim 1, **characterised in that** the receiver (313) is injected onto the claw base plate (310).

7. Claw gripper according to any one of claims 1 to 6, **characterised in that** the claw base plate (10, 110, 210, 310) is designed as a bent sheet metal part.

## Revendications

1. Pince de préhension (1) pour un système de transport de récipients, en particulier pour un système de transport de bouteilles, avec deux bras de préhension (2, 3) qui sont aptes à pivoter sur un ou deux axes (2a, 3a) entre une position de préhension et une position de relâchement et qui sont contraints en direction de la position de préhension ou de la position de relâchement par un accumulateur d'énergie (7, 8) qui contient au moins un aimant permanent (9) fixé dans un logement (13, 113, 213, 313), étant précisé que le logement (13, 113, 213, 313) est conçu comme une capsule et est fermé avec un couvercle (15, 215), **caractérisée en ce que** le bras de préhension (2, 3) contient un corps de base de pince (10, 110, 210, 310) en métal qui est pourvu d'une zone de préhension (5, 6), et le logement (13, 113, 213, 313) est relié au corps de base de pince et est pourvu d'un couvercle (15, 215) apte à être soudé par ultrasons, étant précisé que le logement (13, 113, 213, 313), au moins dans une zone de fixation (13b, 15a) au couvercle, se compose d'une matière plastique apte à être soudée par ultrasons.

2. Pince de préhension selon la revendication 1, **caractérisée en ce que** le logement (13, 113, 213) est emboîté sur le corps de base de pince (10, 110, 210).

3. Pince de préhension selon la revendication 1 ou 2, **caractérisée en ce que** le logement (13) est conçu d'une seule pièce avec un coussinet (16) pour l'axe (2a, 3a), et le coussinet est emboîté sur le corps de base de pince (10).

4. Pince de préhension selon la revendication 1 ou 2, **caractérisée en ce que** le logement (113) est fixé avec un élément de fixation (118) dans le corps de base de pince (110).

5. Pince de préhension selon la revendication 1 ou 2, **caractérisée en ce que** le corps de base de pince (210) pénètre avec une pièce d'ancrage (210a) dans le logement (213).

6. Pince de préhension selon la revendication 1, **caractérisée en ce que** le logement (313) est rapporté par injection sur le corps de base de pince (310).

7. Pince de préhension selon l'une des revendications 1 à 6, **caractérisée en ce que** le corps de base de pince (10, 110, 210, 310) est conçu comme une pièce pliée en tôle.
